# FASCICULE DE BREVET EUROPEEN

(11) **EP 0 728 421 B1**
(45) Date de publication et mention de la délivrance du brevet: **05.06.2002**
(21) Numéro de dépôt: 95203264.7
(22) Date de dépôt: 28.11.1995
(51) Int. Cl.: A23L 3/3472, A23L 1/221

(54) **Procédé d'extraction d'antioxydants de matière végétale**
Verfahren zur Extraktion von Antioxidantien aus Pflanzenmaterial
Antioxidant extraction process from plant material

(30) Priorité: 21.02.1995 EP 95102439
(43) Date de publication de la demande: 28.08.1996
(73) Titulaire: SOCIETE DES PRODUITS NESTLE S.A., 1800 Vevey (CH)
(72) Inventeur: Aeschbach, Robert, CH-1800 Vevey (CH); Rossi, Patricia, CH-1814 La Tour-de-Peilz (CH)
(74) Mandataire: Archambault, Jean

(56) Documents cités:
- EP-A- 0 560 291
- WO-A-90/01271
- CA-A- 2 117 409
- GB-A- 429 664
- GB-A- 2 004 197
- GB-A- 2 160 211
- GB-A- 2 184 341
- US-A- 2 571 948
- US-A- 5 213 833
- DATABASE WPI Week 8351 Derwent Publications Ltd., London, GB; AN 83-847975 XP002004802 & JP-A-58 194 976 (HASEGAWA) , 14 Novembre 1983
- DATABASE WPI Week 7604 Derwent Publications Ltd., London, GB; AN 76-06430x XP002004803 & JP-A-50 157 520 (RUSH-HAMPTON) , 19 Décembre 1975

## Description

La présente invention a pour objet un procédé d'extraction d'antioxydants de matière végétale à l'aide d'un alkylène glycol en C₂-C₆ par pression.

On connaît divers procédés d'extraction d'antioxydants de matière végétale.

WO 90/01271 décrit, entre autres, un procédé d'extraction d'antioxydants. Il s'agit d'un procédé d'extraction et/ou de traitement à chaud d'extraits d'origine végétale et/ou animale, riches en vitamines, en arômes et en substances ayant une activité antioxydante. Ce procédé d'extraction et/ou de traitement à chaud comprend plusieurs étapes et l'application de nombreuses conditions optionnelles, dont notamment l'utilisation éventuelle du 1,2-propylène glycol en tant que solvant d'extraction.

GB A 2160211 décrit un procédé d'extraction des oléorésines à partir d'épices. Cette extraction est réalisée par une succession d'étapes, comprenant le chauffage de la poudre d'épices, l'addition de solvant, la filtration puis l'addition d'eau éventuellement salée au filtrat, la séparation de la solution en deux phases et la récupération des oléorésines à partir de la phase inférieure, une fois la phase supérieure décantée. Les oléorésines résiduelles peuvent être récupérées à partir de la phase supérieure décantée au moyen d'un solvant non miscible à l'eau. A la page 1, ligne 128 et dans la revendication 3, la filtration peut avoir lieu sous pression, positive ou négative, sans indication de valeur de la pression éventuellement appliquée.

US A 2571948 décrit le traîtement d'épices naturelles dans deux buts. Le premier est l'utilisation des colorants, présents dans l'extrait, comme colorants alimentaires ainsi qu'un moyen d'augmenter la qualité des couleurs des aliments. Le deuxième est un moyen de stabiliser les extraits d'épices naturelles, notamment les huiles essentielles et les oléorésines. Pour atteindre ces buts, D2 préconise une première extraction par un solvant lipophile volatile pour obtenir les oléorésines, une seconde extraction du résidu avec un solvant du genre de polyols pour en extraire des principes de valeur tels que les colorants, les arômes et les anti-oxydants, une élimination du polyol par distillation du second extrait, puis la réunion des deux extraits.

CA 2117409 décrit un procédé d'extraction des antioxidants contenus dans les végétaux, l'extrait obtenu étant liquide. Cette technique utilise une huile comme solvant, le mélange huile/plante étant soumis à une pression supérieure ou égale à 40 bars et étant ensuite filtré.

JP 58194976 a trait à un procédé d'extraction d'antioxydants à partir de matière végétale, à l'aide d'un solvant organique à des températures de 90 à 180 °C et sous pression, le tout se déroulant dans une atmosphère inerte.

La présente invention a pour but de proposer un procédé d'extraction d'antioxydants de matière végétale avec un véhicule sélectionné et dans des conditions particulières telles que l'on puisse obtenir des antioxydants faciles à incorporer dans les milieux aqueux et les émulsions.

Le présent procédé permet d'obtenir un spectre plus important de composés antioxydants lors de l'extraction, par rapport à ceux que l'on aurait extraits auparavant. En effet, par exemple, lors de l'extraction d'antioxydants de romarin au propylène glycol par pression, selon la présente invention, on isole principalement de l'acide rosmarinique, en plus du carnosol et de l'acide carnosique.

A cet effet, le présent procédé d'extraction d'antioxydants de matière végétale est caractérisé par le fait:
que l'on mélange la matière végétale dont le taux global en eau est de 5 à 30 % en poids, avec un alkylène glycol en C₂-C₆, que l'on presse le mélange à une pression supérieure ou égale à 40 bar, que l'on sépare les solides en suspension et
que l'on recueille un liquide limpide contenant les antioxydants.

Pour atteindre le taux global en eau de 5 à 30 % en poids, on peut, le cas échéant, ajouter un peu d'eau, notamment 5 à 15 % d'eau en poids, à la matière végétale de départ.

On peut utiliser comme matière végétale de départ, seule ou en mélange, toute épice contenant des antioxydants, notamment le romarin, la sauge, le thym, l'origan et les clous de girofle, et toute plante contenant des antioxydants, notamment le thé vert, le café et les pelures de pommes de terre et de tomates. La matière végétale de départ peut être fraîche, entière ou moulue plus ou moins finement. Elle peut être strippée à la vapeur pour en éliminer la majeur partie des principes odorants qui ne sont pas souhaités pour certaines applications dans lesquelles on désire que les antioxydants soient aussi neutres que possible. Dans d'autres cas, on désire conserver dans les antioxydants liquides une partie au moins des principes odorants et la matière végétale de départ n'est alors pas strippée. Elle se présente de préférence sous forme séchée, qu'elle soit moulue ou non, strippée ou non.

L'alkylène glycol en C₂-C₆, utilisé comme véhicule, est de préférence le glycol, le 1,2-propylène glycol, ou le 1,3-butylène glycol.

De préférence, on mélange la matière végétale de départ avec l'alkylène glycol en C₂-C₆ à une température de 70-100°C.

Le mélange de la matière végétale de départ avec l'alkylène glycol en C₂-C₆ peut également se faire à température ambiante, par exemple à 20°C, de manière à garder au moins une partie des principes odorants de la matière végétale de départ.

De préférence, on effectue le mélange alkylène glycol en C₂-C₆ / matière végétale de départ dans un rapport pondéral de 0,5 à 2.

On peut effectuer une première extraction au MCT, c'est à dire à l'aide d'un mélange de triglycérides à chaîne moyenne en C₆-C₁₂, de manière à n'extraire qu'une partie seulement des antioxydants, c'est à dire les antioxydants liposolubles, contenus dans la matière végétale de départ. Puis on peut effectuer une seconde extraction, selon la présente invention, sur le tourteau du premier pressage, de manière à isoler les antioxydants restants. En effet, par exemple dans le cas du romarin, on peut extraire principalement le carnosol et l'acide carnosique, lors d'une première extraction au MCT. Puis on peut recycler les feuilles de romarin de départ et effectuer une seconde extraction, au 1,2-propylène glycol, de manière à isoler principalement l'acide rosmarinique.

On peut prévoir un prétraitement enzymatique de la matière végétale, de manière à augmenter le rendement d'extraction. En effet dans le cas du romarin, par exemple, on peut augmenter le rendement d'extraction de 20 à 30 % en effectuant un prétraitement enzymatique avec 1 % en poids d'une glucanase, à environ 40° C, sous agitation pendant environ 4 h. Puis on filtre ou on centrifuge, avant de sécher la matière végétale à traiter.

Dans le but d'enrichir l'extrait d'antioxydants sans trop perdre de véhicule, on peut faire une première extraction d'antioxydants, selon la présente invention, et remettre le liquide limpide ainsi recueilli en présence d'une nouvelle charge de matière végétale. On peut renouveler cette opération plusieurs fois.

Aprés avoir mélangé sous agitation la matière végétale de départ, dont le taux global en eau est de 5 à 30 % en poids, avec l'alkylène glycol en C₂-C₆, on soumet l'ensemble à une pression supérieure ou égale à 40 bar. De préférence, pour le pressage, on utilise une presse à piston munie d'une cage filtrante, de type Carver (R), de manière à presser et à filtrer en une seule étape.

L'invention concerne également un procédé de protection d'une émulsion alimentaire, cosmétique ou pharmaceutique, caractérisé par le fait que l'on incorpore dans l'émulsion une quantité efficace d'extraits d'antioxydants d'origine végétale obtenus selon la présente invention.

Le procédé selon la présente invention est décrit plus en détails dans les exemples non limitatifs ci-après, dans lesquels les parties et pourcentages sont pondéraux, sauf indication contraire.

### Exemples 1-5

A 100 g de matière végétale de départ, séchée, hachée et non strippée, on ajoute 100 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants. Le test Rancimat (R) à 110° C dans différentes graisses et huiles et la méthode d'électrode à oxygène à 30° C dans différentes huiles donnent le pouvoir antioxydant sous forme d'indices d'induction indiqués dans le tableau 1.
L'indice d'induction est défini comme étant le rapport:
temps d'induction (échantillon + huile) / temps d'induction (huile).

Dans les exemples 1 à 5, on utilise respectivement comme matière végétale de départ, du romarin, de la sauge, du thym, de l'origan sans eau ajoutée et du thé vert humidifié avec 10 % d'eau.

### Test d'oxydation: électrode à oxygène à 30° C.

On prépare une émulsion en mélangeant 5 % d'huile et le % indiqué en antioxydants par rapport à l'huile dans une solution tampon de pH 7( No.9477, Merck, Darmstadt, D) avec 0,1 % d'émulsifiant par agitation vigoureuse sous azote pendant 30 min que l'on émulsifie par 6 passages consécutifs à 30° C dans un microfluidiseur H 5000.
On mesure ensuite la stabilité oxydative de l'émulsion à l'aide d'une électrode TRI OX EO 200 (R) couplée avec un oxygène-mètre OXI 530 (R).
On attend 5 à 10 min jusqu'à ce que le pourcentage de saturation d'oxygène ait une valeur constante.
Cette mesure s'effectue à 30° C sous agitation en vase clos, après adjonction de 5 ml du catalyseur Hemin (Fluka AG, Buchs, CH) à 100 ml d'émulsion. Le catalyseur Hemin est préparé à partir de 52 mg de solution Hemin dans 100 ml d'eau, auxquels on ajoute 8 gouttes de KOH à 10 %. Le temps d'induction représente la durée en heures pour une absorption totale de l'oxygène dissout.

### Test d'oxydation Rancimat (R) à 110° C:

On place l'échantillon dans un réacteur fermé.
L'échantillon est chauffé à 110° C et est saturé en oxygène provenant de l'air introduit dans le réacteur.
Durant l'oxydation, le réacteur est lui-même relié par un tube souple à un récipient contenant de l'eau distillée et où est plongée une électrode de platine.
Les composés volatiles entraînent une augmentation de la conductivité.

La conductivité est mesurée et les périodes d'induction sont calculées.
On détermine le temps d'induction graphiquement à partir de la courbe transcrite de la conductivité en fonction du temps par intersection de la tangente à la courbe avec l'axe des temps.

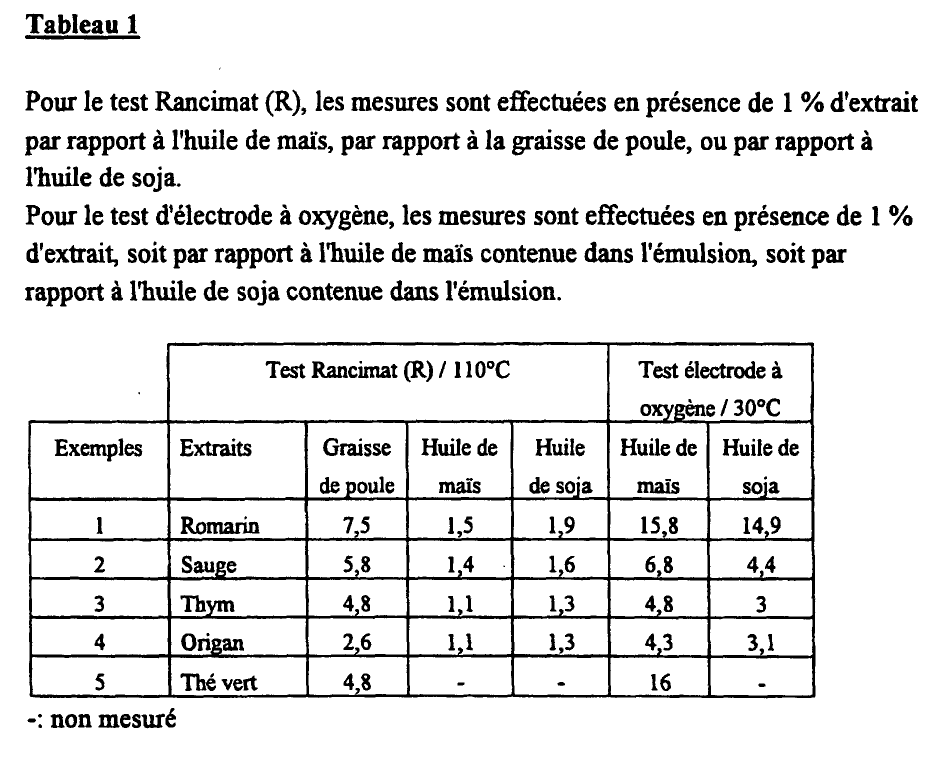

Les mesures du pouvoir antioxydant, indiquées sous forme d'indice d'induction dans le test d'électrode à oxygène, mettent en évidence la qualité et la stabilité oxydative des composés antioxydants en émulsion, par rapport aux résultats obtenus dans une huile dans le test d'oxydation Rancimat (R).
Il est tout à fait surprenant d'obtenir en émulsion un indice d'induction bien supérieur à celui obtenu dans l'huile.

### Exemple comparatif

A titre de comparaison, on effectue une extraction d'antioxydants de romarin au 1,2-propylène glycol par pression d'une part et une extraction d'antioxydants de romarin au MCT par pression d'autre part, puis l'on compare le spectre obtenu lors de l'une et de l'autre des extractions par chromatographie liquide haute performance (HPLC).
1) A 100 g de feuilles de romarin hachées et strippées à la vapeur, on ajoute 50 g de 1,2-propylène glycol, on laisse le tout sous agitation pendant 60 min à température ambiante, on presse le mélange dans une presse à piston de type Carver(R) à 500 bar pendant 60 min, puis l'on recueille un liquide limpide contenant les antioxydants.
   A partir d'un échantillon dudit liquide, on effectue une HPLC.
2) A 100g de feuilles de romarin hachées et strippées à la vapeur, on ajoute 50 g de MCT et l'on maintient le tout sous agitation à 100° C pendant 60 min. On presse le mélange dans une presse à piston de type Carver(R) à 500 bar pendant 60 min, puis l'on recueille une huile limpide contenant les antioxydants.
   A partir d'un échantillon de ladite huile, on effectue une HPLC.

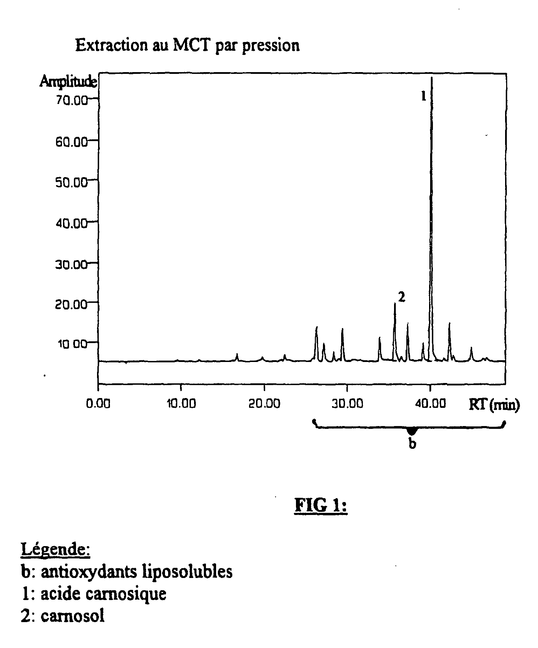

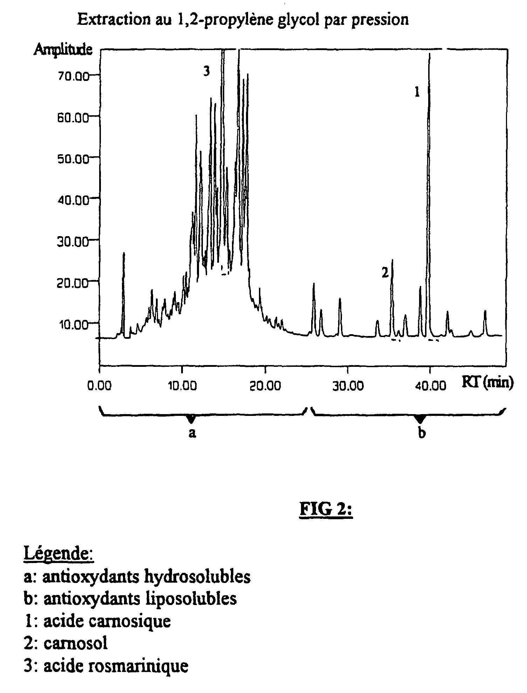

Le spectre présenté sur la fig 2, montre que l'extraction au 1,2-propylène glycol par pression permet d'isoler principalement les antioxydants hydrosolubles ((a) fig 2) en plus des antioxydants liposolubles ((b) fig 2), alors que le spectre présenté sur la fig 1 montre que l'extraction au MCT par pression permet d'isoler uniquement les antioxydants liposolubles ((b) fig 1). En effet, lors de l'extraction d'antioxydants au 1,2-propylène glycol par pression, on isole principalement l'acide rosmarinique (3), antioxydant hydrosoluble, en plus du carnosol (2) et de l'acide carnosique (1), antioxydants liposolubles, et, lors de l'extraction d'antioxydants au MCT par pression, on isole principalement du carnosol (2) et de l'acide carnosique (1), antioxydants liposolubles.
On peut donc envisager des utilisations différentes des extraits d'antioxydants obtenus lors de l'une et de l'autre des extractions. Pour protéger une émulsion alimentaire, cosmétique ou pharmaceutique, on utilisera préférentiellement un extrait d'antioxydants obtenu par extraction au 1,2-propylène glycol par pression. Par contre, pour protéger la phase lipidique d'un aliment, d'un produit cosmétique ou d'un produit pharmaceutique, on utilisera indifférement un extrait d'antioxydants obtenu par extraction au MCT par pression ou un extrait d'antioxydants obtenu par extraction au 1,2-propylène glycol.

### Exemples 6-11

A 100 g de matière végétale de départ, séchée, hachée et non strippée, on ajoute 50 g de 1,2-propylène glycol. On laisse le tout sous agitation pendant 60 min à température ambiante.

On presse le mélange dans une presse à piston, de type Carver (R), à 500 bar pendant 60 min.

On recueille un liquide limpide contenant les antioxydants.
Le test Rancimat (R) à 110° C, soit dans la graisse de poule, soit dans l'huile de maïs et la méthode d'électrode à oxygène à 30° C dans l'huile de maïs donnent le pouvoir antioxydant sous forme d'indices d'induction indiqués dans le tableau 2.

Dans les exemples 6 à 11, on utilise respectivement comme matière végétale de départ, du romarin, de la sauge, du thym, de l'origan, un cocktail d'épices (contenant 40 % de romarin, 20 % de sauge, 20 % de thym et 20 % d'origan) et des clous de girofle.

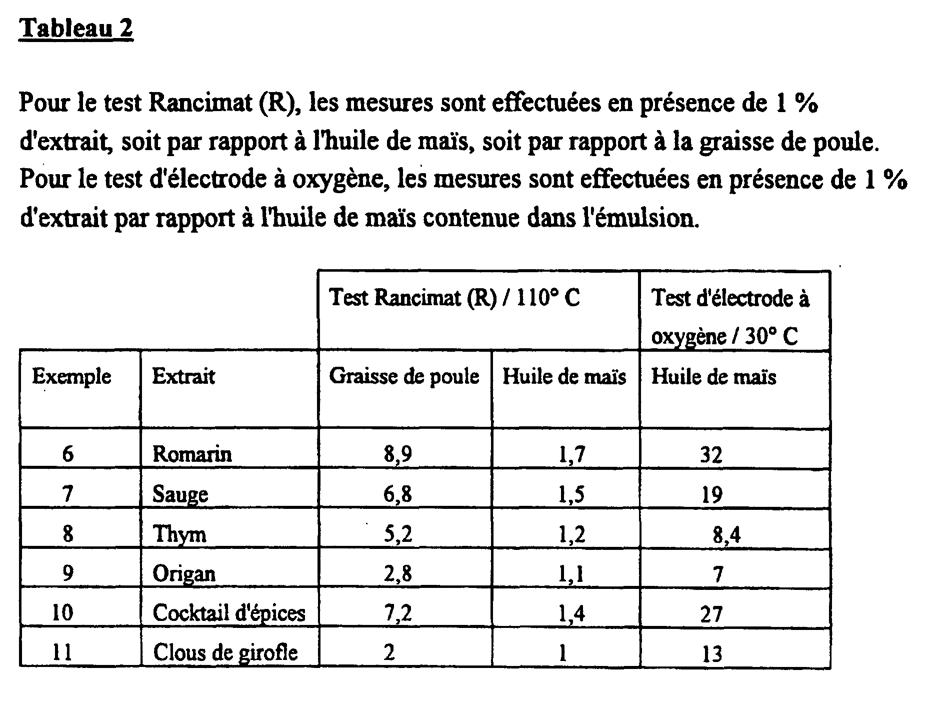

Les mesures du pouvoir antioxydant, indiquées sous forme d'indice d'induction dans le test d'électrode à oxygène, mettent en évidence la qualité et la stabilité oxydative des composés antioxydants en émulsion, par rapport aux résultats obtenus dans une huile dans le test d'oxydation Rancimat (R).
Il est tout à fait surprenant d'obtenir en émulsion un indice d'induction bien supérieur à celui obtenu dans l'huile.

### Exemples 12-14

A 100 g de matière végétale, séchée, hachée et strippée, on ajoute 100 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants.
Le test Rancimat (R) à 110° C dans la graisse de poule et la méthode d'électrode à oxygène à 30° C dans l'huile de maïs donnent le pouvoir antioxydant sous forme d'indices d'induction indiqués dans le tableau 3.

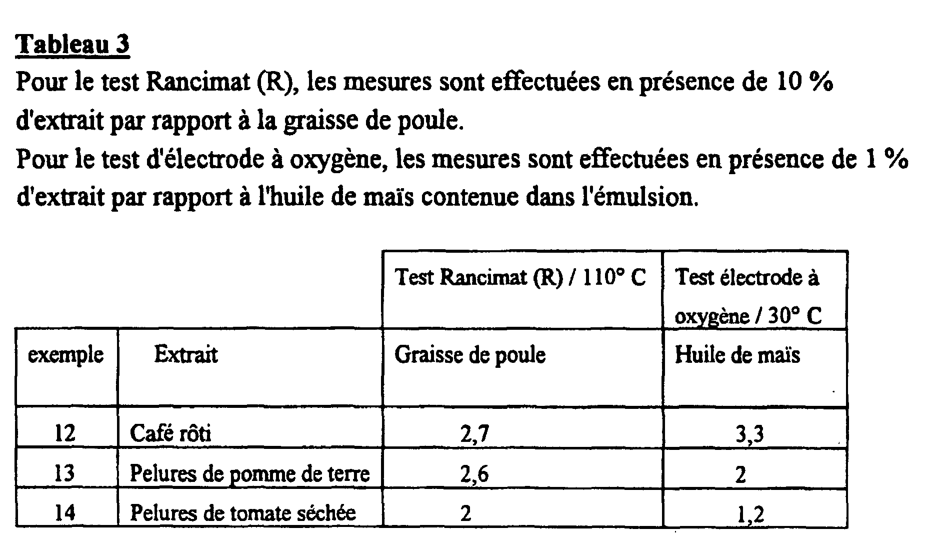

### Exemple 15

On humidifie 50 g de feuilles de romarin, séchées, hachées et non strippées, avec 5 g d'eau, puis on ajoute 50 g de MCT en C₈-C₁₀. On laisse le tout sous agitation pendant 60 min à 80° C.

On presse le mélange dans une presse à piston, de type Carver (R), à 500 bar pendant 60 min.

On recueille un liquide limpide contenant une partie des antioxydants.
Les mesures de chromatographie liquide haute performance (HPLC) permettent de quantifier les différents antioxydants extraits.
Le test Rancimat (R) à 110° C, soit dans la graisse de poule, soit dans l'huile de maïs et la méthode d'électrode à oxygène à 30° C dans l'huile de maïs donnent le pouvoir antioxydant sous forme d'indices d'induction.
Toutes ces mesures sont indiquées dans le tableau 4.

On effectue ensuite une seconde extraction sur le tourteau du premier pressage au 1,2-propylène glycol. A 54 g de tourteau, on ajoute 54 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants.
On effectue les mêmes mesures que lors de la première étape. Les résultats de ces mesures sont indiqués dans le tableau 4.

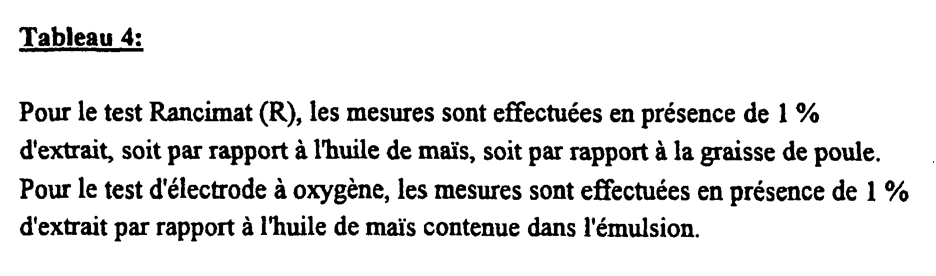

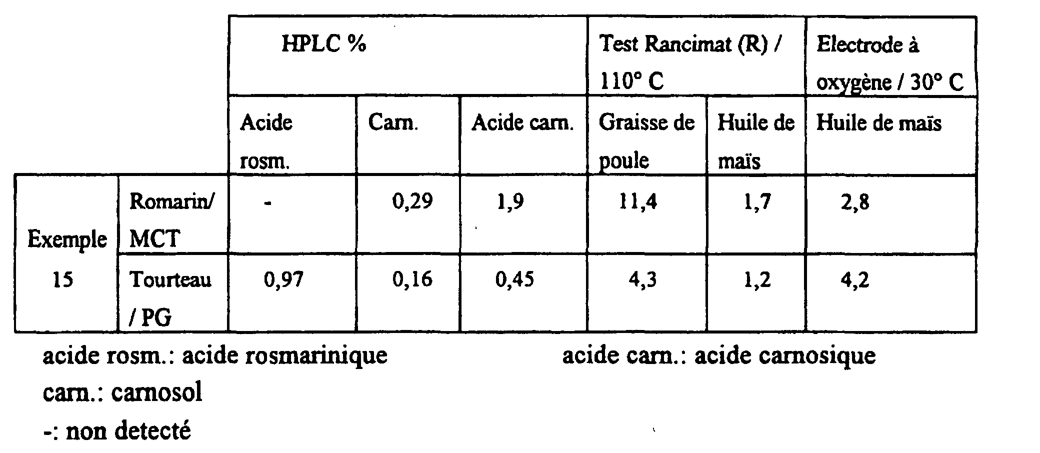

Les mesures HPLC permettent de quantifier les différents composés antioxydants extraits lors de la première extraction au MCT sur les feuilles de romarin, séchées hachées et non strippées, et lors de la seconde extraction au 1,2-propylène glycol sur le tourteau.
La première extraction d'antioxydants du romarin au MCT par pression permet d'extraire préférentiellement l'acide carnosique et le carnosol.
La seconde extraction au 1,2-propylène glycol sur le tourteau permet d'extraire principalement l'acide rosmarinique.

### Exemples 16-18

On humidifie 100 g de feuilles de romarin, séchées, hachées et non strippées, avec 10 g d'eau, puis on ajoute 100 g d'un alkylène glycol en C₂-C₄, utilisé comme véhicule. On laisse sous agitation pendant 60 min à 80° C.

On presse le mélange dans une presse à piston, de type Carver (R), à 500 bar pendant 60 min.

On recueille un liquide limpide contenant les antioxydants.
Les mesures HPLC permettent de quantifier les différents composés antioxydants extraits.
Le test Rancimat (R) à 110° C soit dans la graisse de poule, soit dans l'huile de maïs et la méthode d'électrode à oxygène à 30° C dans l'huile de maïs donnent le pouvoir antioxydant sous forme d'indice d'induction. L'ensemble des résultats est indiqué dans le tabeau 5.

Dans les exemples 16 à 18, on utilise respectivement comme véhicule le glycol, le 1,2-propylène glycol et le 1,3- butylène glycol.

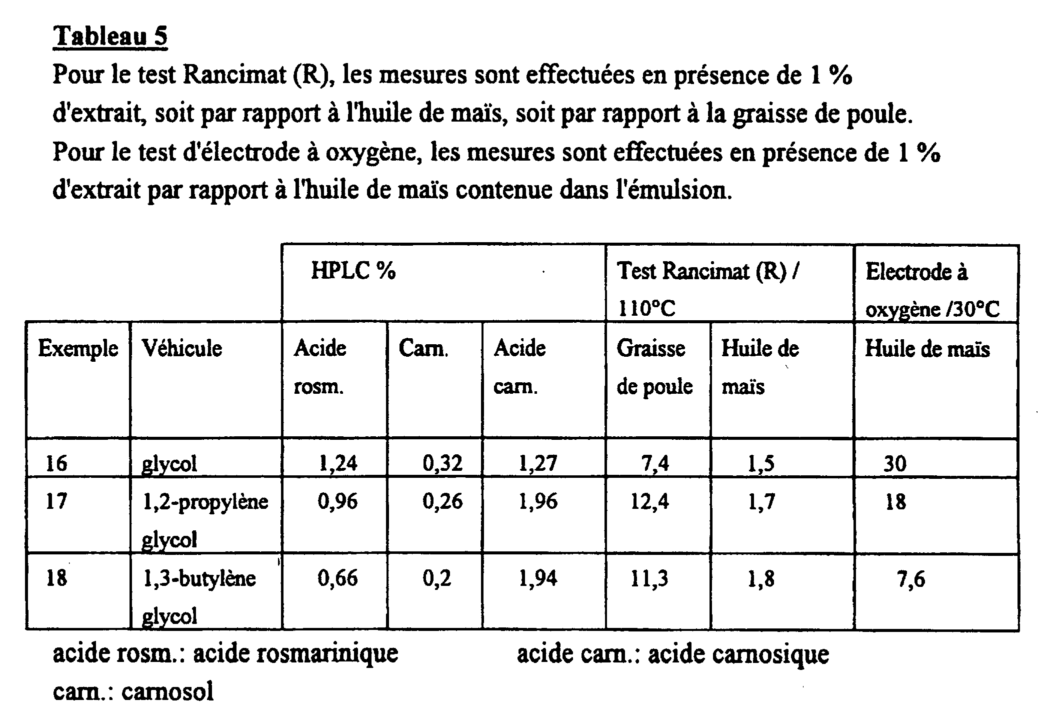

En utilisant comme véhicule, soit le gycol, soit le 1,2-propylène glycol, soit le 1,3-butylène glycol, lors de l'extraction par pression de composés antioxydants du romarin, on extrait principalement l'acide rosmarinique et l'acide carnosique.

### Exemples 19-23

On procède de la manière décrite aux exemples 6 à 10.

On recueille un liquide limpide contenant les antioxydants.
On effectue des mesures HPLC, de manière à identifier et quantifier les composés antioxydants fractionnés à partir des différents extraits.
Les résultats sont indiqués dans le tableau 6.

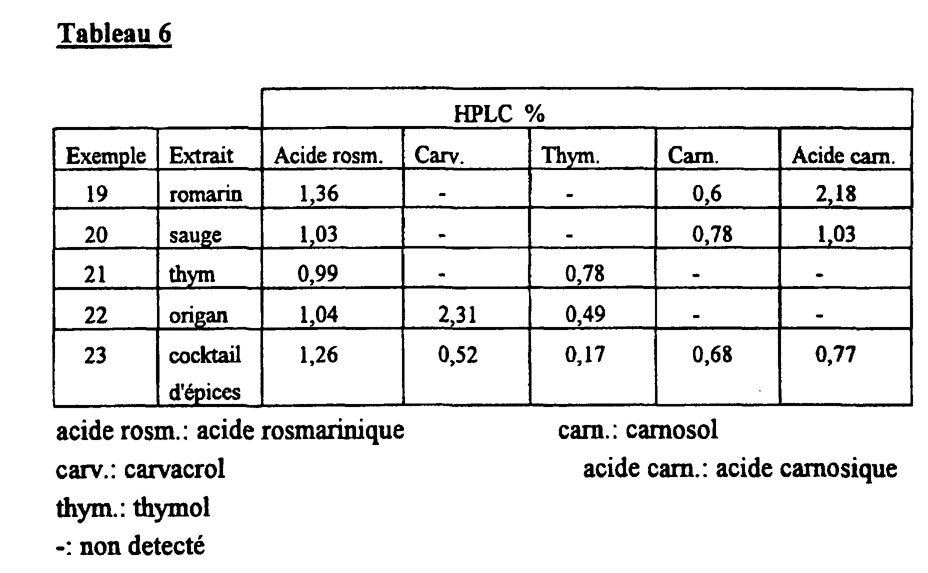

Il est surprenant de constater que pour les matières végétales de départ ci-dessus, on obtient un spectre important de composés antioxydants après extraction au 1,2-propylène glycol par pression selon la présente invention.

### Exemple 24

On traite 20 g de romarin non strippé et moulu en présence de 120 ml d'eau avec 0,2 g de Glucanex ((R), Novo) pendant 4 h à 40° C, à pH 4, puis on filtre et sèche le résidu.

On ajoute ensuite 10 g de 1,2-propylène glycol et on traite le mélange 60 min à 100° C.

On presse le mélange dans une presse à piston, de type Carver (R) et on recueille un liquide limpide contenant 2,5 % d'antioxydants avec un rendement de 95 % par rapport au 1,2-propylène glycol engagé.

### Exemple 25

A 100 g de feuilles de romarin, séchées, hachées et non strippées, on ajoute 100 g de 1,2-propylène glycol. On laisse le tout sous agitation pendant 60 min à 80° C.

On presse le mélange dans une presse à piston, de type Carver (R), à 500 bar pendant 60 min.

On recueille un liquide limpide contenant les antioxydants.

On effectue ensuite une seconde extraction au 1,2-propylène glycol, de la manière décrite ci-dessus dans les mêmes proportions, sur une nouvelle charge de matière végétale en présence du liquide limpide recueilli au cours de la première extraction.

On recueille un liquide limpide enrichi en antioxydants.

## Revendications

1. Procédé d'extraction d'antioxydants de matière végétale, **caractérisé par le fait: que** l'on mélange la matière végétale dont le taux global en eau est de 5 à 30 % en poids, avec un alkylène glycol en C₂-C₆, que l'on presse le mélange à une pression supérieure ou égale à 40 bar, que l'on sépare les solides en suspension et que l'on recueille un liquide limpide contenant les antioxydants.

2. Procédé selon la revendication 1, **caractérisé par le fait que** l'on utilise comme matière végétale de départ, seule ou en mélange, toute épice contenant des antioxydants, notamment le romarin, la sauge, le thym, l'origan et les clous de girofle, et toute plante contenant des antioxydants, notamment le thé vert, le café et les pelures de pommes de terre, et de tomates.

3. Procédé selon la revendication 1, **caractérisée par le fait que** l'alkylène glycol en C₂-C₆, utilisé comme véhicule, est le glycol, le 1,2-propylène glycol, ou le 1,3-butylène glycol.

4. Procédé selon la revendication 1, **caractérisé par le fait que** l'on effectue le mélange de la matière végétale de départ et de l'alkylène glycol en C₂-C₆ à 70-100° C.

5. Procédé selon la revendication 1, **caractérisé par le fait que** le mélange de la matière végétale de départ et de l'alkylène glycol en C₂-C₆ se fait à la température ambiante.

6. Procédé selon la revendication 5 ou 6, **caractérisé par le fait que** le rapport pondéral alkylène glycol en C₂-C₆ / matière végétale de départ est de 0,5 à 2.

7. Procédé selon la revendication 5 ou 6, **caractérisé par le fait que** l'on effectue une première extraction avec un mélange de triglycérides à chaîne moyenne en C₆-C₁₂ sur une matière végétale par pression, puis on utilise le tourteau comme matière de départ.

8. Procédé selon la revendication 5 ou 6, **caractérisé par le fait que** l'on effectue un prétraitement enzymatique de la matière végétale en l'incubant avec une glucanase en milieu aqueux, puis on centrifuge la suspension et on sèche la matière végétale ainsi traitée.

9. Procédé selon la revendication 5 ou 6, **caractérisé par le fait que** l'on effectue une succession d'extractions, en remettant lors de chaque extraction, le liquide limpide recueilli au cours de l'extraction précédente, en présence d'une nouvelle charge de matière végétale.

10. Procédé de protection d'une émulsion alimentaire, cosmétique ou pharmaceutique, **caractérisé par le fait que** l'on incorpore dans l'émulsion une quantité efficace d'extraits d'antioxydants d'origine végétale obtenus par la mise en oeuvre du procédé selon l'une des revendications 1 à 9.

## Patentansprüche

1. Verfahren zur Extraktion von Antioxidanzien aus Pflanzenmaterial, dadurch gekennzeichent, dass man das Pflanzenmaterial, dessen Gesamtwassergehalt 5 bis 30 Gew.-% beträgt, mit einem C₂-C₆-Alkylenglykol mischt, dass man die Mischung mit einem Druck größer als oder gleich 40 bar presst, dass man die in Suspension befindlichen Feststoffe abtrennt und dass man eine die Antioxidanzien enthaltende, klare Flüssigkeit gewinnt.

2. Verfahren nach Anspruch 1, **dadurch gekennzeichnet, dass** man als Ausgangspflanzenmaterial, allein oder in Mischung, jedes Antioxidanzien enthaltende Gewürz, insbesondere Rosmarin, Salbei, Thymian, Oregano und Nelken, und jede Antioxidanzien enthaltende Pflanze, insbesondere grünen Tee, Kaffee und Kartoffel- und Tomatenschalen, verwendet.

3. Verfahren nach Anspruch 1, **dadurch gekennzeichnet, dass** das als Vehikel verwendete C₂-C₆-Alkylenglykol Glykol, 1,2-Propylenglykol oder 1,3-Butylenglykol ist.

4. Verfahren nach Anspruch 1, **dadurch gekennzeichnet, dass** man die Mischung des Ausgangspflanzenmaterials und des C₂-C₆-Alkylenglykols bei 70-100°C vornimmt.

5. Verfahren nach Anspruch 1, **dadurch gekennzeichnet, dass** die Mischung des Ausgangspflanzenmaterials und des C₂-C₆-Alkylenglykols bei Raumtemperatur vorgenommen wird.

6. Verfahren nach Anspruch 5 oder 6, **dadurch gekennzeichnet, dass** das Gewichtsverhältnis von C₂-C₆-Alkylenglykol zu Ausgangspflanzenmaterial 0,5 bis 2 beträgt.

7. Verfahren nach Anspruch 5 oder 6, **dadurch gekennzeichnet, dass** man eine erste Extraktion mit einer Mischung von C₆-C₁₂-Triglyceriden mittlerer Kettenlänge an einem Pflanzenmaterial unter Druck vornimmt und dann den Presskuchen als Ausgangsmaterial verwendet.

8. Verfahren nach Anspruch 5 oder 6, **dadurch gekennzeichnet, dass** man eine enzymatische Vorbehandlung des Pflanzenmaterials vornimmt, indem man es mit einer Glucanase in wässrigem Medium inkubiert, und dann die Suspension zentrifugiert und das auf diese Weise behandelte Pflanzenmaterial trocknet.

9. Verfahren nach Anspruch 5 oder 6, **dadurch gekennzeichnet, dass** man eine Folge von Extraktionen vornimmt, indem man bei jeder Extraktion die bei der vorhergehenden Extraktion gewonnene klare Flüssigkeit mit einem neuen Ansatz von Pflanzenmaterial zusammenbringt.

10. Verfahren zum Schutz einer Nahrungsmittelemulsion oder einer kosmetischen oder pharmazeutischen Emulsion, **dadurch gekennzeichnet, dass** man in die Emulsion eine wirksame Menge von antioxidierenden Extrakten pflanzlichen Ursprungs einarbeitet, die durch Anwendung des Verfahrens nach einem der Ansprüche 1 bis 9 erhalten wurden.

## Claims

1. Process for extracting antioxidants from plant material, **characterized in that** the plant material of which the total water content is 5 to 30% by weight is mixed with a C₂-C₆ alkylene glycol, that the mixture is pressed at a pressure greater than or equal to 40 bar, that the suspended solids are separated and that a clear liquid is collected containing the antioxidants.

2. Process according to claim 1, **characterized in that** as the starting plant material, any spice containing antioxidants is used, alone or as a mixture, in particular rosemary, sage, thyme, marjoram and cloves, and any plant containing antioxidants,in particular green tea, coffee, potato peelings and tomato skins.

3. Process according to claim 1, **characterized in that** the C₂-C₆ alkylene glycol used as the vehicle, is glycol, 1,2-propylene glycol, or 1,3-butylene glycol.

4. Process according to claim 1, **characterized in that** the starting plant material and the C₂-C₆ alkylene glycol are mixed at 70-100°C.

5. Process according to claim 1, **characterized in that** the starting plant material and the C₂-C₆ alkylene glycol are mixed at room temperature.

6. Process according to claim 5 or 6, **characterized in that** the ratio by weight of C₂-C₆ alkylene glycol/starting plant material is 0.5 to 2.

7. Process according to claim 5 or 6, **characterized in that** a first extraction is carried out with a mixture of medium chain C6-triglycerides on plant material by pressing, and the cake is then used as a starting material.

8. Process according to claim 5 or 6, **characterized in that** an enzyme pre-treatment is carried out on the plant material by incubating it with a glucanase in an aqueous medium, the suspension is then centrifuged off and the plant material thus treated is dried.

9. Process according to claim 5 or 6, **characterized in that** a succession of extractions is carried out by putting, during each extraction, the clear liquid collected during the previous extraction in the presence of a new charge of plant material.

10. Process for the protection of a nutrient, cosmetic or pharmaceutical emulsion, **characterized in that** an effective quantity of antioxidants of plant origin obtained by the application of the process according to one of claims 1 to 9 is incorporated in the emulsion.
